# EUROPEAN PATENT SPECIFICATION

(11) **EP 1 892 981 B1**
(45) Date of publication and mention of the grant of the patent: **17.06.2009**
(21) Application number: 06119332.2
(22) Date of filing: 22.08.2006
(51) Int. Cl.: H04W 4/00

(54) **Apparatus and associated method for paging an access terminal in a radio communication system**
Vorrichtung und Verfahren zum Rufen eines Endgerätes in einem Funkkommunikationssystem
Dispositif et procédé pour indication d'appel à un terminal d'accès dans un système de communication radio

(43) Date of publication of application: 27.02.2008
(73) Proprietor: Research In Motion Limited, Waterloo, Ontario N2L 3W8 (CA)
(72) Inventor: Willey, William Daniel, San Francisco, CA 94109 (US)
(74) Representative: Hibbert, Juliet Jane Grace

(56) References cited:
- WO-A-20/05079104
- US-B1- 6 754 229
- SANDIP SARKAR ET AL: "Common-Channel Soft Handoff in cdma2000-The Paging Channel" IEEE TRANSACTIONS ON MICROWAVE THEORY AND TECHNIQUES, IEEE SERVICE CENTER, PISCATAWAY, NJ, US, vol. 48, no. 6, June 2000 (2000-06), XP011037998 ISSN: 0018-9480
- SERGE WILLENEGGER: "cdma2000 Physical Layer: An Overview" J. COMUNN. NETWORKS, IEEE, vol. 2, 2000, XP002420745

## Description

The present invention relates generally to a manner by which to page an access terminal of a radio communication system to alert the access terminal of a pending call, or other communication. More particularly, the present invention relates to apparatus, and an associated method, that provides for the generation, sending, and analysis of a quick page message upon a paging channel, such as a QPCH (quick paging channel) defined in an exemplary cellular communication system. The page message is formed in a manner that reduces the likelihood of occurrence of false wakeup of an access terminal. Excessive battery depletion, as a result of false wakeup of the access terminal, is avoided.

### Background of the Invention

Advancements in communication technologies have permitted the development and deployment of new types of communication systems and communication services. Cellular telephony, and associated communication services available therethrough, are popularly utilized by many, typically providing users with communication mobility and also provides the capability of communications when the use of wireline communication systems would not be practical or possible.

While early-generation, cellular communication systems provided primarily for voice communications and only limited data communication services, newer-generation systems increasingly provide for high-speed data communication services at variable data communication rates. A CDMA2000, cellular communication system that provides for EV-DO services is an exemplary type of new-generation, cellular communication system that provides for high-speed data services. Operational details and protocols defining communications and operational requirements of devices of the system are set forth in an operating standard specification. Various aspects of operation of the CDMA2000 EV-DO communication scheme remain to be standardized and certain parts of the existing standard specification are considered for amendment. Various successor-generation communication schemes are also undergoing standardization and yet others are envisioned to be standardized.

For instance, a revision to the standard specification, release B of the CDMA2000 EV-DO specification standard that defines a quick paging channel (QPCH) available upon which to broadcast access-terminal pages by an access network (AN) to an access terminal (AT). The QPCH was adopted in industry contributions 3GPP2 C20-20060323-013R1 and 3GPP2 C20-20060323-003R1 and published in 3GPP2 document C.S0024-B V1.0. Generally, pages are broadcast by the access network to an access terminal to alert the access terminal of a pending communication. And by so alerting the access terminal, the access terminal performs actions to permit the effectuation of the communication. Page indications broadcast upon the quick paging channel are broadcast in a manner that facilitates reduced battery consumption of the access terminal by reducing the battery consumption of the battery of the access terminal. Increased battery longevity is provided, reducing the rate at which a battery of the access terminal must be recharged. The access terminal is, as a result, able to be operated for a greater period of time between rechargings or battery replacement. The aforementioned promulgations provide for broadcast of a message including page indications upon a physical logical layer that is monitored by the access terminal. The access terminal monitors the QPCH prior to monitoring the control channel to receive regular, control channel MAC (medium access control) messages such as page messages. A quick page message is broadcast upon the QPCH that contains quick page indicators. The quick page message includes a number of quick page indicator slots populated with quick page indicators.

During operation, a mobile station hashes to a quick page indicator location, i.e., slot, within the quick page message based upon a session seed, a 32-bit pseudorandom number. If the quick page indicator of the quick page indicator slot to which the access terminal hashes indicates that the access terminal is not being paged, the access terminal enters into a sleep state, a reduced-power state, in which the access terminal does not remain powered at a level to receive the regular control channel MAC messages. Power savings is particularly significant in the event that the control channel MAC messages are lengthy and span multiple control channel frames or capsules.

In the existing scheme, however, the access terminal is susceptible to the occurrence of a false wakeup, that is, the access terminal does not enter into a sleep state but, rather, the access terminal enters into an active state to monitor the regular control channel for reception of regular control channel MAC messages even though there shall be no message for the access terminal. Because the communication system is a multiuser system, there is a possibility that anther access terminal that is being paged has its page indication hashed to the same page indication slot. As the number of access terminals that are paged in a system increases, the likelihood of occurrence of a false wakeup correspondingly increases.

If a manner could be provided by which to reduce the occurrence of false wakeups, improved battery longevity of the access terminal would be possible.

It is in light of this background information related to paging by an access network of an access terminal that the significant improvements of the present invention have evolved.

U.S. 6,754,229 (Nortel) discloses a method of alerting, over a channel, a remote device in an idle state. A value representing the location of an initial paging indicator bit within a first half of a timeslot on the channel is computed based on a hashing algorithm defined in IS-2000 that uses information about the remote device. A value representing the location of a second paging indicator bit within a latter half of the timeslot is computed based on a different hashing algorithm. The first and second paging indicator bits are used in the alerting of the remote device in the idle state.

WO 2005/079104 (Qualcomm) discloses mapping by a base station of broadcast and multicast services to random sequences based on the identifiers of the services. Each random sequence is associated with a specific location for sending a notification indicator in each frame, the specific locations being randomized with respect to the locations for the notification indicators for each remaining random sequence. The randomness reduces the likelihood of false alarm.

Main aspects of the subject invention are as set out in the independent claims. Principal subsidiary features of the subject invention are as set out in the dependent claims.

### Brief Description of the Drawings

Figure 1 illustrates a functional block diagram of a radio communication system in which an embodiment of the present invention is operable.

Figure 2 illustrates a graphical representation of the relationship between the probability of occurrence of a false wakeup as a function of the number of pages in a multi-user communication system for various numbers of hashes.

Figure 3 illustrates an exemplary quick page message generated pursuant to operation of an exemplary embodiment of the present invention.

Figure 4 illustrates an exemplary quick page message generated pursuant to operation of another exemplary embodiment of the present invention.

Figure 5 illustrates formation of an exemplary quick page message pursuant to operation of another exemplary embodiment of the present invention.

Figure 6 illustrates a method flow diagram representative of the method of operation of an embodiment of the present invention.

### Detailed Description

The present invention, accordingly, advantageously provides apparatus, and an associated method, by which to page an access terminal of a radio communication system to alert the access terminal of a pending call, or other communication.

Through operation of an embodiment of the present invention, a manner is provided to generate, send, and analyze a quick page message, such as a quick page message generated and sent upon a QPCH (Quick Paging Channel) defined in a CDMA2000 EV-DO cellular communication system.

The page message is formed in a manner such that, when analyzed, the access terminal is less susceptible to occurrence of a false wakeup. By reducing the likelihood of occurrence of false wakeup, excessive battery depletion that occurs as a result of false wakeup is less likely to occur.

In one aspect of the present invention, hashing is performed at both an access network and at an access terminal using the same input number, such as a session seed defined in the CDMA2000 EV-DO operating specification standard or other pseudorandom number, or another input number, such as an access terminal identifier (ATI). Hashing is performed upon the input number in the same manner, independently, at the access network and at the access terminal. Multiple hashes are formed by hashing the input number in different manners, e.g., such as by rotating the bit sequence of the input number to create different hash values. Alternately, different hash functions are used to create the different hashes. Formation of the multiple hashes is sometimes referred to herein as multi-hashing. Each hash function operation is carried out in the same manner at the access network and at the access terminal so that the resultant hash values generated at the respective entities are identical. For instance, hashing is first performed at both the access network and at the access terminal upon the input number in non-rotated form. Then, the hashing is performed, again at both the access network and at the access terminal, upon the input number whose bits are rotated by a first number of bits. If additional hashing is performed, the access network and the access terminal both perform the hashing upon the input number, whose bits are further rotated, again in the same manner at the access network and at the access terminal. Bit rotation also decorrelates the hashed values.

In a further aspect of the present invention, the hashing is performed upon the input number by operation of a hash function, or algorithm, upon the input number. The hash function, e.g., is time-varying or otherwise, in some manner, generates hash values that are time-dependent. And, if desired, if multiple hash values are generated, the hash values are further caused to be dissimilar. That is to say, when multiple hash values are generated, a later-generated hash value is caused to be of a value different than any earlier-generated hash value.

In another aspect of the present invention, the access network identifies the number of hashes and the number of page indications that are to be included in a quick page message to page a particular access terminal. A signaling message is generated that includes an indication of the number of hashes or page indications that are going to be broadcast by the access network to a particular access terminal within a paging message. The access terminal, from this signaling message, ascertains the number of page indications that are going to be directed to the access terminal in the quick page message. Responsive to this received number, the access terminal performs hashing upon an input number to form an appropriate number of hash values, and such hash values are used pursuant to analysis of the page message, when received, to identify where in the page message to detect values of page indicators.

In another aspect of the present invention, the number of hashes performed by the access network and, correspondingly, the number of hashes performed at the access terminal, is a selectable number. The number is selected, at least in part, based upon the number of pages that are to be made to other access terminals. And, more generally, the number of hashes is responsive to communication activity in the communication system. When many access terminals are paged, the number of page indications, and hash values, per access terminal is, e.g., a small value. And, conversely, when only a small number of access terminals are to be paged, the number of page indications, and hash values, is, e.g., large. Generally, the number of hash values and resultant page indications per access terminal, populated into a page message for a particular access terminal, is inversely proportional to the communication activity, that is, the number of other pages that are made to other access terminals during a particular period of operation of the communication system. Ideally, the number of page indications and hash values per access terminal is chosen in a way to minimize the probability of false wakeup.

In another aspect of the present invention, the hash values determine where in the page message that the page indications are populated. The hashing performed at the access network and at the access terminal are carried out in the same manners. The page indication locations of a page message in which the page indication values are populated are the same hash values that are generated at the access terminal, and the access terminal detects and analyzes the corresponding page indication locations of the page message, once received at the access terminal.

In another aspect of the present invention, in the event that any of the values of the page indications populating the page indication locations corresponding to the hash values indicate that the access terminal is not being paged, the access terminal enters into a sleep state. For instance, if the access terminal detects any page indication value to which the access terminal hashes and determines the access terminal is not being paged, the access terminal enters into a sleep state. Thereby, the access terminal is more quickly able to enter into a power-saving, sleep mode. Conversely, if the access terminal identifies a page indication value populating a page indication location that indicates that the access terminal is being paged and the access terminal knows that multiple page indications are broadcast to the access terminal in the quick page message, the access terminal monitors for the same page indication value in another page indication location to which the access terminal hashes. If the first positive indication is a false indication, monitoring of a second, or other, page indication locations prior to determining finally that the access terminal is being paged reduces the likelihood of occurrence of false wakeup. Thereby, the access terminal does not enter into an active state to receive a communication responsive to a false wakeup indication. Improved power consumption characteristics of the access terminal result, providing better battery longevity.

In these and other aspects, therefore, apparatus, and an associated methodology, is provided for an access network that selectably generates a first page message on a first paging channel. A page indication populator is configured to populate the first page with a selected number of page indications. A hasher is configured to generate a selected number of hash values. Each hash value is determinative of at where the page indicator populates the first page message with a page indication.

In these and other aspects, therefore, further apparatus, and an associated methodology, is provided for an access terminal that selectably receives a first page message on a first paging channel. A hasher is configured to generate a selected number of hash values. And, a page indication detector is configured to detect values of page indications populating the first page message. Hash values that are generated are used to identify to the page indication detector where in the first page message to detect the values of the page indications.

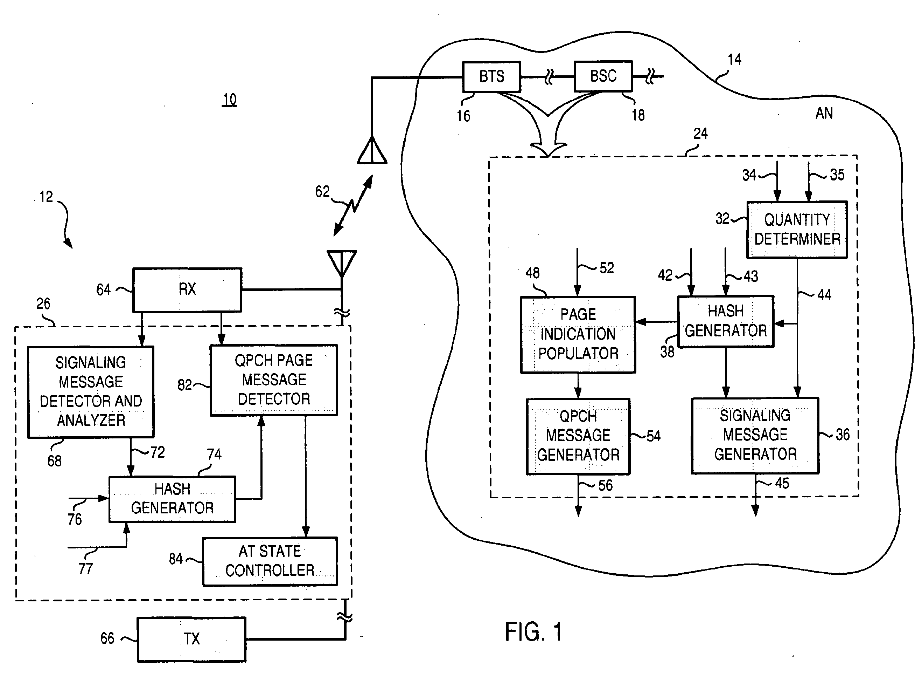

Referring first, therefore, to Figure 1, a radio communication system, shown generally at 10, provides for communications with access terminals, of which the access terminal 12 is exemplary. The communication system forms a multi-user communication system that typically includes a large number of access terminals and a plurality of concurrent communication dialogs. While only a single access terminal is shown in Figure 1, additional access terminals, analogous to the access terminal 12, typically form a portion of the communication system.

Communications are effectuated between an access terminal and a radio network 14, formed of fixed network infrastructure elements, such as a base transceiver station (BTS) 16 and a base station controller (BSC) 18. The access network encompasses a geographical area within which communications with the access network are possible. That is to say, when an access terminal is positioned within the area encompassed by the access network, the access terminal is generally able to communicate with the access network, and the access network is typically able to communicate with the access terminal.

The communication system is operable in general conformity with the operating protocols and parameters of an appropriate communication specification standard. The description set forth herein is exemplary, and the teachings of various embodiments of the present invention are implementable in any of various types of communication systems.

As previously mentioned, the access terminal is alerted, by broadcast of page messages when a communication, initiated at the network, is to be terminated at the access terminal. A quick paging channel (QPCH), or analogous channel, is defined. Quick page indications, populating a quick page message, are of values that identify whether an access terminal is being paged. However, also as noted previously, particularly during times of heavy usage, a false wakeup of the access terminal might occur due to a quick page indication in the message intended for one access terminal is broadcast within a slot that is also used by another of the access terminals. False wakeup prevents an access terminal from entering into a power-saving sleep mode.

Accordingly, pursuant to an embodiment of the present invention, the access network includes apparatus 24, and the access terminal includes apparatus 26, that operate to reduce the likelihood of the occurrence of false wakeup. The elements of the apparatus 24 and the apparatus 26 are functionally represented, implementable in any desired manner, including, for instance, by algorithms executable by processing circuitry.

The elements forming the apparatus 24 are implemented at any appropriate location of the access network 14, including, as illustrated, at the BTS 16 and BSC 18 or distributed amongst such entities as well as others.

Here, the apparatus 24 includes a quantity of hashes/page indications per access terminal determiner 32. The determiner is coupled to receive, as input indicia, indications of network activity on the line 34. The network activity is quantified, for instance, in a number of page values. The network is aware, e.g., of the number of access terminals that shall be paged. Or, the number of page values comprises, e.g., an expected number of pages, an average number of prior pages, or other paging quantity indicia. Responsive to the indication of the network activity, the determiner determines the number of hashes that are to be generated and the number of page indications that are to be provided pursuant to paging of an access terminal in a quick paging message. In an alternate implementation, the number of hash values is a set number, e.g., a fixed number greater than one. The fixed number of two, e.g., appears to work well when the number of page indication locations in a quick page message is about one hundred eighty. The number of hash values and number of page indications correspond. An indication of the determined quantity is provided to a signaling message generator and to a hash generator, a "hasher", 38.

A number known to both the access network and to the access terminal, such as a session seed or other pseudorandom number, or a number such as an access terminal identifier (ATI) is provided to the hash generator, here represented by way of the line 42. The hash generator hashes the number. That is to say, a hash function is performed upon the number to generate a hash value. Different hash values are provided by, e.g., rotating the number provided to the hash generator and performing the hash function, or algorithm, thereon. Multiple hash values are generated, for instance, by operating upon multiple rotations of the number. With an ideal hash function, all values are equally likely to be generated. An exemplary hash function comprises a mathematical "modulo" operation. A time factor, known to both the access network and the access terminal, such as a system clock time, is, in one embodiment, further provided to, and used by, the hash generator in the formation of hash values. Such factor is represented by line 43 in Figure 1.

The signaling message generator 36 to which the value determined by the determiner 32 is provided generates a signaling message, here generated upon the line 45, that identifies the quantity determined by the determiner. The signaling message is broadcast to the access terminal 12, thereby to alert the access terminal of the determined quantity. The signaling message generator may operate in conjunction with the QPCH generator and include the quantity in the QPCH message. The hash values created by the hash generator 38 are provided to a page indication populator 48. The page indication populator 48 is also provided with a network communication request, here provided by way of the line 52. The page indication populator selects page indication values depending upon whether the access terminal is to be paged. For instance, when an access terminal is to be paged, the page indication values are logical "1" values. In one implementation, all values are initially logical "0" values and then set as appropriate. The page indication values and their associated page indication locations, defined by the hash values generated by the hash generator 38, are provided to a QPCH, or other, message generator 54. The message generator forms a page message that includes a plurality of page indication locations. The page indication populator populates selected page indication locations of the message with the page indication values. The locations populated with a page indication value are determined by the hash values generated by the hash generator 38. In like manner, page indications are formed for other access terminals and hash values are generated to define at where in the page message the page indications intended for other access terminals are populated in the message generated by the message generator 54. When the resultant message is broadcast by the access network, access terminals, such as the access terminal 12, are provided with an indication of whether the access terminal is to be paged.

Transceiver elements of the base transceiver station 16 cause broadcast of the messages generated by the message generator 54 of the apparatus 24 upon a radio air interface, represented in Figure 1 by the arrow 62. The message is delivered to the access terminal 12 as well as other access terminals within reception range of the broadcast message. The access terminal 12 includes transceiver circuitry, here represented by a receive part 64 and a transmit part 66. The receive part 64 operates to receive signals sent thereto, such as the messages generated by the apparatus 24 of the access network. And, certain of the detected signals are provided to the apparatus 26. Of significance here are detections of the signaling message generated by the signaling message generator of the access network and of the page message generated by the message generator 54.

Indications are provided to a signaling message detector and analyzer 68. The detector and analyzer operate to detect the contents of the signaling message and analyze the detected message to ascertain the number of hashes, or page indications, per access terminal indicated in the message. Indications are provided, here by way of the line 72, to a hash generator 74. The hash generator is also provided with values of the input number, here indicated to be provided by way of the line 76, known to both the access network and access terminal. The time factor, known to both the access network and access terminal is also provided to the generator 74, here represented by way of line 77. The hash generator operates in manners analogous to operation of the hash generator 38 of the access network to perform hash functions upon the input number. And, the input number provided to the hash generator corresponds to the input number provided to the hash generator 38 on the line 42. The number of hash values generated by the hash generator corresponds to the number identified by the detector and analyzer 68. Hash values created by the hash generator are provided to a QPCH (Quick Paging Channel), or other, page message detector 82. The hash values created by the hash generator identify to the page message detector which of the page indication locations that should be monitored to determine whether a page is broadcast to the access terminal. The message broadcast by the access network and detected and operated upon by the access terminal is an atomic message. That is to say, all of the bits are received in a single message. Responsive to detections made by the detector, an indication is provided to an access terminal (AT) state controller 84 to control the state into which the access terminal is placed. And, when the QPCH message indicates that the access terminal is paged, the access terminal begins to monitor a second page channel, for broadcast of a second page message thereon. The receive part of the access terminal also monitors the second page channel. The page indications in the message generated by the message generator 54 are therefore sent pursuant to, i.e., in furtherance of the sending of the second page message on the second page channel.

In the event that the first quick page indication slot monitored by the message detector indicates no page message broadcast to the access terminal, the state controller places the access terminal into a sleep mode. If a first of the quick page indication slots monitored by the detector indicates a page to have been broadcast, but a second of the quick page indication slots monitored by the detector indicates no page, the state controller also causes the access terminal to enter into a low-power, sleep mode. Additional page indications, if more than two, are analogously monitored. The occurrence of a false wakeup is reduced as one or more additional quick page indications are monitored to provide further indication of whether a page has been sent to the access terminal.

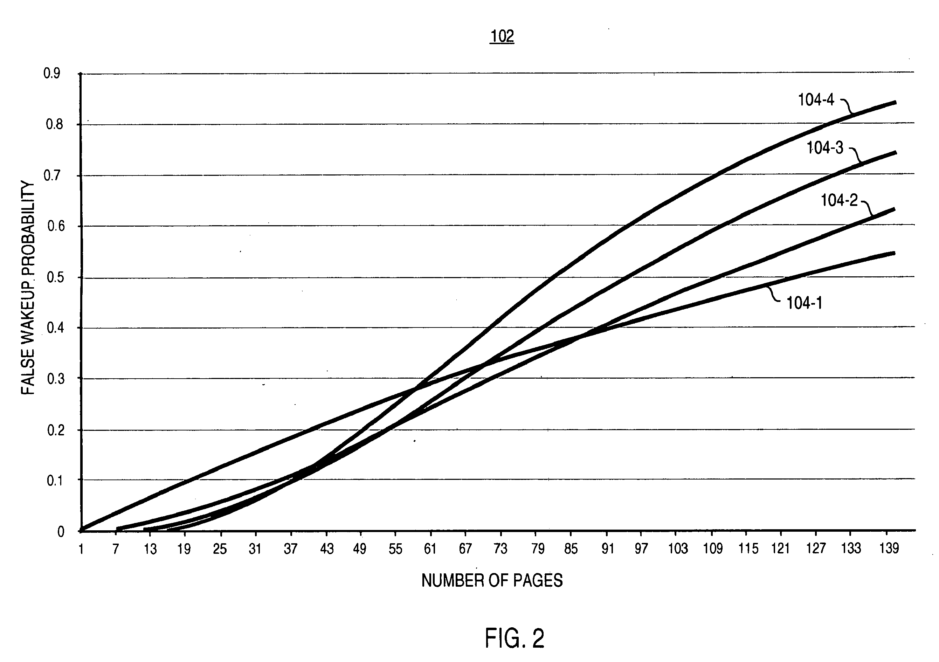

Figure 2 illustrates a graphical representation, shown generally at 102, that shows the relationship between the occurrence of false wakeup and the number of pages in the communication system 10 shown in Figure 1, pursuant to exemplary operation. Plots 104 illustrate the general proportional relationship between the number of pages to access terminals in a multi-user communication scheme and the occurrence of false wakeup, represented in terms of probability. Four plots, plots 104-1, 104-2, 104-3, and 104-4, are shown. The plot 104-1 is representative of the relationship when a single page indication is provided to a particular access terminal in a page message to alert the access terminal of the page. A single hash value is generated, and the page indication is populated in a single page indication location determined by the single hash value. The plot 104-2 is representative of two page indication bits provided in the page message to alert a particular access terminal of the page. Two hash values are generated, and the page indication locations in which the page indications are positioned are determined by the two hash values. The plot 104-3 is representative of use of three page indications in a page message to alert a particular access terminal of the page. Three hash values are generated and their values are determinative of the positioning of the three page indication locations in which the page indications are populated. And, the plot 104-4 is representative of the relationship between false wakeup occurrences when four page indications are used in a page message to page the access terminal.

Review of the plots shows that the number of page indications in a page message that provides the lowest false wakeup probability for a given number of pages in the communication system, i.e., network activity, varies with the number of pages. Pursuant to operation of an embodiment of the present invention, advantage is taken of this relationship in the selection of the number of page indications to use per access terminal. Such selection is made, e.g., by the determiner 32 shown in Figure 1. Selection is made in such a way as to minimize the false wakeup probability. For each number of pages, i.e., network activity, selection is made of the number of page indications that are to be used to page, in the quick page message, an access terminal. Using, for instance, plots analogous to the plots 104 shown in Figure 2, the lowest curve for each of the number of pages, i.e., network activity, is selected. Analysis indicates that, when a number of pages is relatively small, the lowest probability of false wakeup occurs when greater number of page indications per access terminal are utilized. Conversely, at higher numbers of pages, i.e., network activity, lesser numbers of page indications provides the lowest false wakeup probabilities. Changeover occurs at various thresholds, indicated in the representation of Figure 2 when plots cross one another.

Once determination and selection is made at the access network, indication of the selection is provided to an access terminal. The number of page indications, known at both the access network and at the access terminal, permits operation of the apparatus 24 and 26 in coordinated manner. In the exemplary implementation, the page indication values populating a quick page message are all received in the same message. The access terminal need not wake up at different times for separate bits as all of the bits of the message are received at once in the same message. Furthermore, the same page indicator values are hashed instead of, as previously utilized, making divisions into multiple physical groups. And, the page indication locations defined by the hash values are further able to be generated in a manner such that the page indication locations are dissimilar. Rotation of the input number used in the generation of the hash values decorrelates the hash values, and the introduction of time variance in the hash function also provides for hash value dissimilarity.

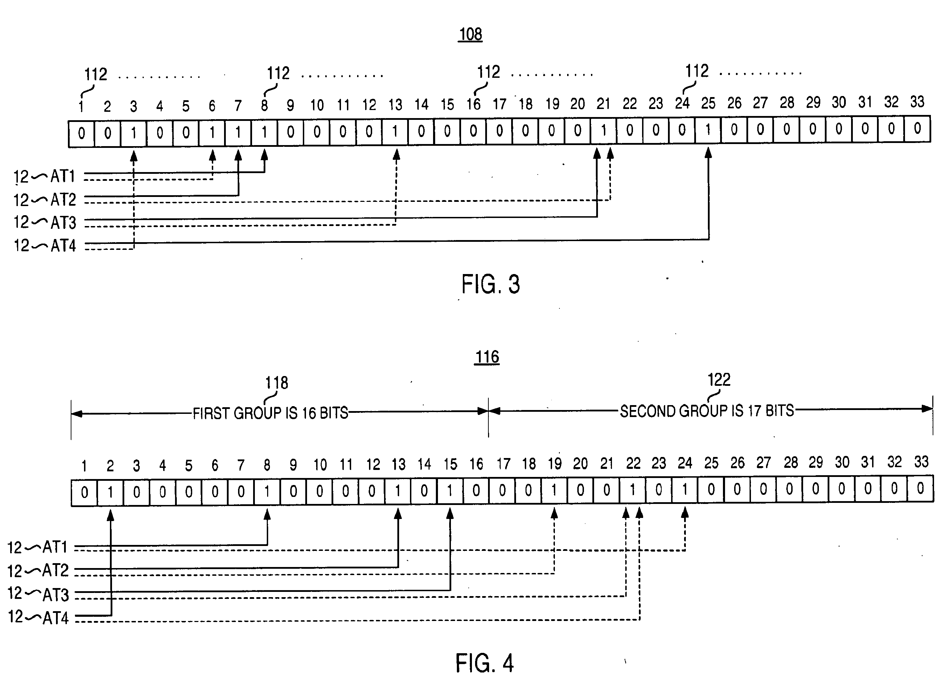

Figure 3 illustrates an exemplary quick page message, shown generally at 108. The message is generated, for instance, with respect to the configuration shown in Figure 1, at the message generator 54. The quick page message includes a plurality, here 33, page indication locations 112, numbered as 1-33. Initially, each page indication location is set to logical "0" values. Page indications for four access terminals 12, identified as AT1, AT2, AT3, and AT4, are represented in the message 108. A hash generator generates hash values of 8 and 6 for the access terminal AT 1. And, page indication locations 8 and 6 are populated with values to indicate whether the access terminal AT1 is paged. Here, the logical values "1" are inserted into the page indication locations 8 and 6 that identify that the AT1 is paged. Analogously, with respect to the access terminal AT2, the hash generator generates hash values of 7 and 21, and page indications are inserted into page indication locations 7 and 21 to identify that the access terminal AT2 is paged. Hash values 21 and 13 generated with respect to the access terminal AT3 cause page indication locations 21 and 13 to be populated with page indication bits to identify, here, that the access terminal AT3 is paged. And, hash values generated with respect to the access terminal AT4 of 25 and 3 cause the page indication locations 25 and 3 to be populated with page indication bits, here again to identify that the access terminal AT4 is paged. In this implementation, any of the page indication locations of the message 108 are available to be populated with page indication bits associated with any of the access terminals. And, as indicated at the page indication location 21, a page indication location might include a page indication bit associated with more than one of the access terminals. Ideally, the hash generator generates hash values that permit even, *viz*. equal, distribution of page indication values across the entire message 108. Each hash for a particular access terminal hashes over the same page indication location in contrast to conventional procedures. And, through use of the time factor, the occurrence of repeated generation of hash values of similar values, and corresponding population of the same page indication locations, for a particular access terminal, is unlikely.

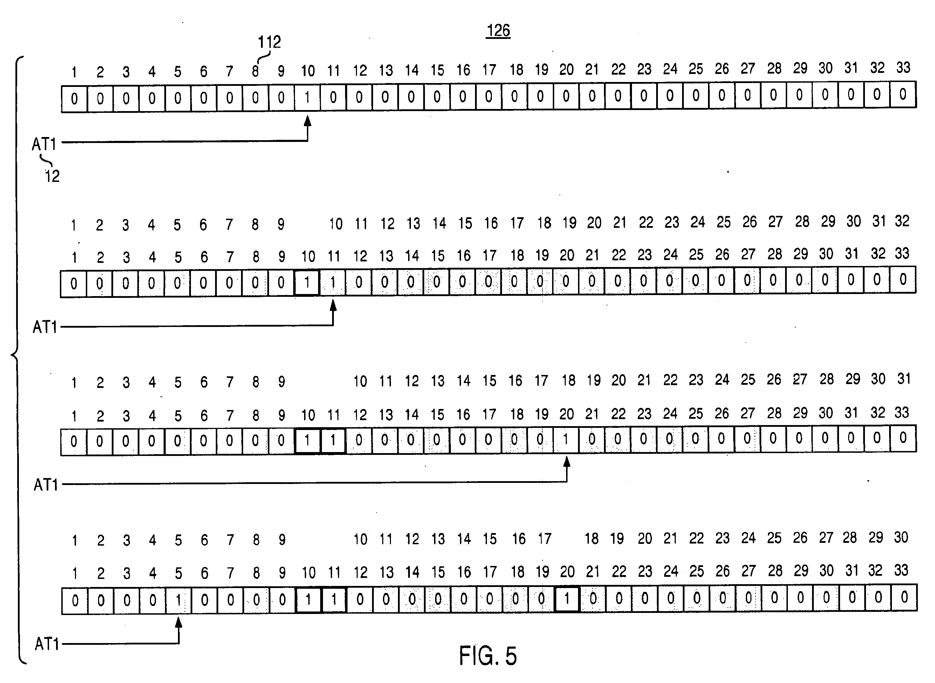

Figure 4 illustrates another message, here shown generally at 116 that also includes thirty-three page indication locations 112 that are populated with page indication values, here again to page access terminals AT1, AT2, AT3, and AT4. Here, the message is divided into two groups, a first group 118, and a second group 122. Initially, here also, each page indication location is set to logical "0" values. In this implementation, only a single page indication location per group is available for page indicator values associated with a particular access terminal. That is to say, with respect to the access terminal AT 1, a single page indication location in the first group is available, and a single page indication location in the second group is available. When a hash value generated by the hash value generator is of a value within the first group, another hash value must be of a value within the second group. Ideally, the hash generator generates hash values that permit even distribution of page indication values across each group of the message. And, as shown in the representation of Figure 5, a page indication location is available to each of the access terminals in the first group and in the second group. The example shown in Figure 5 is for an implementation in which two page indication bits are available within the page message per access terminal. If additional page indication bits are available, the page message is divided into additional numbers of groups of substantially equal size, , and the page indication locations are correspondingly made available in each of the additional numbers of groups.

Figure 5 illustrates a quick page message 126 and the manner by which a hash generator operates pursuant to another embodiment. Here, four page indication locations are made available to the access terminal AT1 over the thirty-three bits of the quick page message. And, again, each page indication location is initially set to logical "0" values. When a hash value is selected and the page indication location 112 determined therefrom is used, that page indication location is no longer available to that access terminal at which to populate the message with another page indication value. That is to say, a hash value cannot be repeated for that access terminal. In the representation shown in Figure 5, a first page indication value is populated in page indication location 10. Here also, ideally, the hash generator generates hash values that permit even distribution of page indications across all of the available page indication locations. As noted below, when a page indication location is used, the location becomes no longer available. Page indication location 10 is no longer available for the access terminal AT1. A next-generated hash value is of 11 and a page indication bit is inserted into the page indication location 11. Thereafter, neither page indication locations 10 nor 11 are available. A subsequently-generated hash value of 20 causes the page indication value to be inserted into page indication location 20. And, thereafter, page indication locations 10, 11, and 20 are no longer available. A fourth-generated hash value of 5 is generated, and the page indication location 5 is populated with a page indication value. In this implementation, use of a time factor is generally not required.

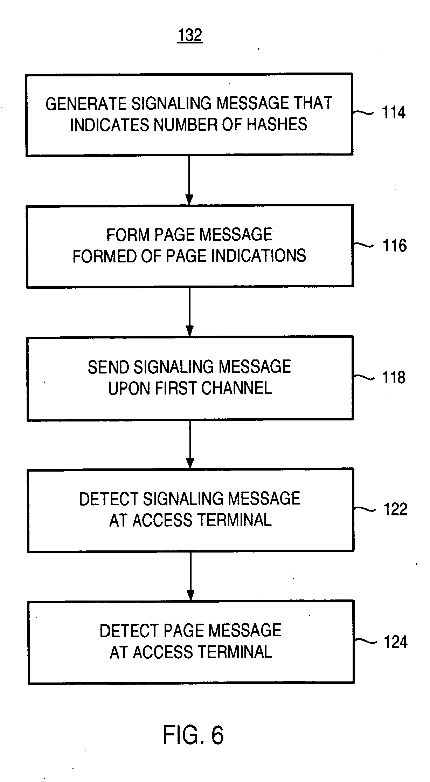

Figure 6 shows a method flow diagram, shown generally at 132, representative of exemplary operation of an embodiment of the present invention for a communication system that selectably generates page messages on a first channel.

First, and as indicated by block 114, a signaling message is generated that indicates a selected number of hashes to page indications that shall be generated within a page message sent upon the first channel. Then, and as indicated by the block 116, a page message is formed of the page indications corresponding to the selected number of hashes.

As indicated by the block 118, the signaling message is sent upon the first channel. The signaling message is detected, indicated by the block 122, at an access terminal together with the selected number of hashes to quick page indicator slots that are contained in the signaling message. And, as indicated by the block 124, the page message is detected at the access terminal, and a determination is made whether the page message includes the page indications corresponding to the selected number of hashes.

Thereby, through operation of an embodiment of the present invention, an access terminal is able better, and quickly, to determine whether a page is broadcast thereto. If a quick page message, page indication location to which the access terminal hashes fails to include an indication that the access terminal is being paged, the access terminal enters into a reduced power state. The occurrence of false wakeup is less likely to occur due to the multi-hashing to the multiple quick paging indication slots.

The previous descriptions are of preferred examples for implementing the invention, and the scope of the invention should not necessarily be limited by this description. The scope of the present invention is defined by the following claims.

## Claims

1. Apparatus (24) for an access network (14) that generates a first page message (56) to an access terminal (12) within the network (14) on a first paging channel, said apparatus (24) comprising :
a determiner (32), receiving indicia of network activity (34) and, in response thereto, outputting a page value with respect to the access terminal (12), the page value being based on network activity;
a page indication populator (48), coupled to the determiner (32) and configured to populate the first page message (56) with a first number of page indications to be sent to the access terminal (12), the first number of page indications being based on the page value; and,
a hasher (38) configured to receive the page value and to generate a first number of hash values equal to the first number of page indications, each hash value being determinative of where said page indication populator (48) populates the first page message (56) with a respective one of the first number of page indications.

2. The apparatus (24) of claim 1, wherein the number of hash values in the first page message (56) is greater than two.

3. The apparatus (24) of claim 1, wherein the number of page indications in the page message (56) is greater than two.

4. The apparatus (24) of claim 1, wherein the first page message (56) is formatted to include a plurality of page indication locations (112), and wherein each hash value generated by said hasher (38) is determinative of a location (112) in the first page message (56) that said page indication populator (48) populates with a page indication.

5. The apparatus (24) of claim 4, wherein the hash values generated by said hasher (38) are within a range of values, the number of values in the range corresponding in number with the plurality of the page indication locations (112) of the first page message (56).

6. The apparatus (24) of claim 5, wherein the number of hash values generated by said hasher (38) comprises a plurality of hash values, the hash values being substantially evenly distributed over the range of values of the number of the page indication locations (112).

7. The apparatus (24) of claim 4, wherein the first page message (56) is formatted to include a first group (118) of a first plurality of page indication locations (112) and at least a second group (122) of a second plurality of page indication locations (112), wherein the number of page indications includes a first page indication and at least a second page indication.

8. The apparatus (24) of claim 7, wherein said hasher (38) generates a first hash value and at least a second hash value, the first hash value causing said page indication populator (48) to populate a page indication location (112) of the first group (118) with the first page indication and the second hash value causing said page indication populator (48) to populate a page indication location (112) of the second group (122) with the second page indication.

9. The apparatus (24) of claim 1, wherein said hasher (38) is configured to perform a hash function upon an input number (42, 43), each hash value created by said hasher provided by performing the hash function upon the input number (42, 43).

10. The apparatus (24) of claim 9, wherein said hasher (38) creates the first hash value by performing the hash function upon a first combination of the input number (42, 43), and creates the second hash value by performing the hash function upon a second combination of the input number (42, 43).

11. The apparatus (24) of claim 9, wherein the input number (42, 43) upon which said hasher (38) performs the hash function comprises a pseudorandom number.

12. The apparatus (24) of claim 1, wherein hash values generated by said hasher (38) are time-dependent.

13. The apparatus (24) of claim 1, wherein each of the hash values generated by said hasher (38) is of a dissimilar value.

14. The apparatus of claim 13, wherein said hasher (3 8) further comprises an identifier configured to identify prior-selected hash values, said hasher prohibiting subsequent generation of a hash value equal to a prior-selected hash value.

15. The apparatus of claim 1, wherein the number of hash values generated by said hasher (38) comprises a set number of hashes.

16. Apparatus (26) for an access terminal (12) that receives a first page message (56) on a first paging channel, said apparatus comprising :
a signaling message detector and analyzer (68), which detects the contents of a signaling message (45) from an access network (14) and which analyzes the signaling message to ascertain therefrom a first number of hash values sent to the access terminal (12), the first number of hash values being determined based on activity in the access network (14);
a hasher (74) configured to generate a first number of hash outputs in response to the signaling message (45); and,
a page message detector (82), configured to detect values of page indications populating the first page message (56), the hash outputs generated by said hasher (74) being used to identify to said page message detector (82) where in the first page message (56) to detect the values of the page indications.

17. The apparatus of claim 16, wherein the number of hash outputs generated by said hasher (74) is greater than two.

18. A method for paging, said method comprising the operations of:
generating, at an access network (14), a first numbed of hash values based on network activity;
populating a first page message (56) with a first number of page indications, the number of page indications corresponding to the number of hash values, locations (112) of the first page indications in the first page message (56) being determined by the first number of hash values generated during said operation of generating; and,
sending the first page message (56) to an access terminal (12), subsequent to populating the first page message (56) with the first number of page indications.

19. The method of claim 18, further comprising the operation of detecting, at the access terminal (12), the first page message (56) subsequent to delivery of the whole of the first page message (56) at the access terminal (12).

20. The method of claim 19, further comprising the operation of generating, at the access terminal (12), a same number of hash outputs as the number of hash values generated at the access network (14).

21. The method of claim 20, further comprising the operation of determining values of page indications at locations (112) in the first page message (56), the page indications being identified by the hash outputs generated by the hasher (74) at the access terminal (12).

22. The method of claim 20, wherein said operations of generating hash values at the access network (14) and generating hash outputs at the access terminal (12) are carried out in identical manners.

23. The method of claim 21, wherein the page indications populated in the first page message (56) are populated therein pursuant to generation of a second page message.

## Patentansprüche

1. Vorrichtung (24) für ein Zugangsnetzwerk (14), die eine erste Page-Nachricht (56) an ein Zugangs-Terminal (12) in dem Netzwerk (14) auf einem ersten Paging-Kanal erzeugt, wobei die Vorrichtung aufweist:
eine Bestimmungsvorrichtung (32), die Indicia einer Netzwerkaktivität (34) empfängt und, als Reaktion darauf, einen Page-Wert hinsichtlich des Zugangs-Terminals (12) ausgibt, wobei der Page-Wert auf einer Netzwerkaktivität basiert;
einen Page-Anzeige-"Befüller" bzw. -"Populator" (48), der mit der Bestimmungsvorrichtung (32) verbunden ist und konfiguriert ist, die erste Page-Nachricht (56) mit einer ersten Anzahl von Page-Anzeigen zu füllen zum Senden an das Zugangs-Terminal (12), wobei die erste Anzahl von Page-Anzeigen auf dem Page-Wert basiert; und
eine Hash-Vorrichtung (38), die konfiguriert ist, den Page-Wert zu empfangen und eine erste Anzahl von Hash-Werten zu erzeugen gleich der ersten Anzahl von Page-Anzeigen, wobei jeder Hash-Wert angibt, wo der Page-Anzeige-"Populator" (48) die erste Page-Nachricht (56) mit einer jeweiligen der ersten Anzahl von Page-Anzeigen befüllt.

2. Vorrichtung (24) gemäß Anspruch 1, wobei die Anzahl von Hash-Werten in der ersten Page-Nachricht (56) größer als zwei ist.

3. Vorrichtung (24) gemäß Anspruch 1, wobei die Anzahl von Page-Anzeigen in der Page-Nachricht (56) größer als zwei ist.

4. Vorrichtung (24) gemäß Anspruch 1, wobei die erste Page-Nachricht (56) formatiert ist, um eine Vielzahl von Page-Anzeige-Positionen zu umfassen, und wobei jeder Hash-Wert, der durch die Hash-Vorrichtung erzeugt wird, eine Position (112) in der ersten Page-Nachricht (56) bestimmt, die der Page-Anzeige-Populator (48) mit einer Page-Anzeige befüllt.

5. Vorrichtung (24) gemäß Anspruch 4, wobei die Hash-Werte, die durch die Hash-Vorrichtung (38) erzeugt werden, in einem Bereich von Werten sind, wobei die Anzahl von Werten in dem Bereich hinsichtlich der Anzahl der Vielzahl der Page-Anzeige-Positionen (112) der ersten Page-Nachricht (56) entsprechen.

6. Vorrichtung (24) gemäß Anspruch 5, wobei die Anzahl von Hash-Werten, die durch die Hash-Vorrichtung (38) erzeugt werden, eine Vielzahl von Hash-Werten aufweist, wobei die Hash-Werte im Wesentlichen gleichmäßig über den Bereich von Werten der Anzahl der Page-Anzeige-Positionen (112) verteilt sind.

7. Vorrichtung (24) gemäß Anspruch 4, wobei die erste Page-Nachricht (56) formatiert ist, um eine erste Gruppe (118) einer ersten Vielzahl von Page-Anzeige-Positionen (112) und zumindest eine zweite Gruppe (122) einer zweiten Vielzahl von Page-Anzeige-Positionen (112) zu umfassen, wobei die Anzahl von Page-Anzeigen eine erste Page-Anzeige und zumindest eine zweite Page-Anzeige umfasst.

8. Vorrichtung (24) gemäß Anspruch 7, wobei die Hash-Vorrichtung (38) einen ersten Hash-Wert und zumindest einen zweiten Hash-Wert erzeugt, wobei der erste Hash-Wert den Page-Anzeige-Populator (48) veranlasst, eine Page-Anzeige-Position (112) der ersten Gruppe (118) mit der ersten Page-Anzeige zu befüllen, und der zweite Hash-Wert den Page-Anzeige-Populator (48) veranlasst, eine Page-Anzeige-Position (112) der zweiten Gruppe (122) mit der zweiten Page-Anzeige zu befüllen.

9. Vorrichtung (24) gemäß Anspruch 1, wobei die Hash-Vorrichtung (38) konfiguriert ist, eine Hash-Funktion auf einer Eingabe-Zahl (42, 43) durchzuführen, wobei jeder Hash-Wert, der durch die Hash-Vorrichtung (38) erzeugt wird, durch Durchführen der Hash-Funktion auf der Eingabe-Zahl (42, 43) vorgesehen ist.

10. Vorrichtung (24) gemäß Anspruch 9, wobei die Hash-Vorrichtung (38) den ersten Hash-Wert erzeugt durch Durchführen der Hash-Funktion auf einer ersten Kombination der Eingabe-Zahl (42, 43) und den zweiten Hash-Wert erzeugt durch Durchführen der Hash-Funktion auf einer zweiten Kombination der Eingabe-Zahl (42, 43).

11. Vorrichtung (24) gemäß Anspruch 9, wobei die Eingabe-Zahl (42, 43), auf welcher die Hash-Vorrichtung (38) die Hash-Funktion durchführt, eine pseudozufällige Zahl aufweist.

12. Vorrichtung (24) gemäß Anspruch 1, wobei die Hash-Werte, die durch die Hash-Vorrichtung (38) erzeugt werden, zeitabhängig sind.

13. Vorrichtung (24) gemäß Anspruch 1, wobei jeder der Hash-Werte, die durch die Hash-Vorrichtung (38) erzeugt werden, einen verschiedenen Wert hat.

14. Vorrichtung gemäß Anspruch 13, wobei die Hash-Vorrichtung (38) weiter einen Identifizierer aufweist, der konfiguriert ist, vorher gewählte Hash-Werte zu identifizieren, wobei die Hash-Vorrichtung eine nachfolgende Erzeugung eines Hash-Werts gleich einem vorgewählten Hash-Wert verbietet.

15. Vorrichtung gemäß Anspruch 1, wobei die Anzahl von Hash-Werten, die durch die Hash-Vorrichtung (38) erzeugt werden, eine feste Anzahl von Hashes aufweist.

16. Vorrichtung (26) für ein Zugangs-Terminal (12); die eine erste Page-Nachricht (56) auf einem ersten Paging-Kanal empfängt, wobei die Vorrichtung aufweist:
einen Signalisierungs-Nachrichten-Detektor und Analysierer (68), der die Inhalte einer Signalisierungsnachricht (45) von einem Zugangsnetzwerk (14) erfasst und die Signalisierungsnachricht analysiert, um daraus eine erste Anzahl von Hash-Werten zu ermitteln, die an das Zugangs-Terminal (12) gesendet werden, wobei die erste Anzahl von Hash-Werten basierend auf einer Aktivität in dem Zugangsnetzwerk (14) bestimmt wird;
eine Hash-Vorrichtung (38), die konfiguriert ist, eine erste Anzahl von Hash-Ausgaben als Antwort auf die Signalisierungsnachricht (45) zu erzeugen; und
einen Page-Nachricht-Detektor (82), der konfiguriert ist, Werte von Page-Anzeigen zu erfassen, welche die erste Page-Nachricht (56) befüllen, wobei die Hash-Ausgaben, die durch die Hash-Vorrichtung (38) erzeugt werden, verwendet werden, um für den Page-Nachricht-Detektor (82) zu identifizieren, wo in der ersten Page-Nachricht (56) die Werte der Page-Anzeigen zu erfassen sind.

17. Vorrichtung gemäß Anspruch 16, wobei die Anzahl von Hash-Ausgaben, die durch die Hash-Vorrichtung (38) erzeugt werden, größer als zwei ist.

18. Verfahren zum Paging, das die Operationen aufweist:
Erzeugen, an einem Zugangsnetzwerk (14), einer ersten Anzahl von Hash-Werten basierend auf einer Netzwerkaktivität;
Befüllen einer ersten Page-Nachricht (56) mit einer ersten Anzahl von Page-Anzeigen, wobei die Anzahl von Page-Anzeigen der Anzahl von Hash-Werten entspricht, wobei Positionen (112) der ersten Page-Anzeigen in der ersten Page-Nachricht (56) bestimmt werden durch die erste Anzahl von Hash-Werten, die während der Operation des Erzeugens erzeugt werden; und
Senden der ersten Page-Nachricht (56) an ein Zugangs-Terminal (12), nachfolgend auf ein Befüllen der ersten Page-Nachricht (56) mit der ersten Anzahl von Page-Anzeigen.

19. Verfahren gemäß Anspruch 18, das weiter aufweist die Operation des Erfassens, an dem Zugangs-Terminal (12), der ersten Page-Nachricht (56) nachfolgend auf eine Lieferung der gesamten ersten Page-Nachricht (56) an dem Zugangs-Terminal (12).

20. Verfahren gemäß Anspruch 19, das weiter aufweist die Operation eines Erzeugens, an dem Zugangs-Terminal (12), einer gleichen Anzahl von Hash-Ausgaben wie die Anzahl von Hash-Werten, die an dem Zugangs-Netzwerk (14) erzeugt werden.

21. Verfahren gemäß Anspruch 21, das weiter aufweist die Operation eines Bestimmens von Werten von Page-Anzeigen an Positionen (112) in der ersten Page-Nachricht (56), wobei die Page-Anzeigen durch die Hash-Ausgaben identifiziert werden, die durch die Hash-Vorrichtung (74) an dem Zugangs-Terminal (12) erzeugt werden.

22. Verfahren gemäß Anspruch 20, wobei die Operationen des Erzeugens von Hash-Werten an dem Zugangsnetzwerk (14) und des Erzeugens von Hash-Ausgaben an dem Zugangs-Terminal (12) auf identische Weise ausgeführt werden.

23. Verfahren gemäß Anspruch 21, wobei die Page-Anzeigen, die in der ersten Page-Nachricht (56) befüllt werden, darin befüllt werden gemäß einer Erzeugung einer zweiten Page-Nachricht.

## Revendications

1. Appareil (24) destiné à un réseau d'accès (14) qui génère un premier message de recherche (56) pour un terminal d'accès (12) dans le réseau (14) sur un premier canal de recherche, ledit appareil (24) comprenant :
un dispositif de détermination (32) recevant des signes d'activité du réseau (34) et, en réponse à ceux-ci, fournissant en sortie une valeur de recherche par rapport au terminal d'accès (12), la valeur de recherche étant basée sur l'activité du réseau ;
un dispositif de peuplement d'indications de recherche (48), relié au dispositif de détermination (32) et configuré pour peupler le premier message de recherche (56) avec un premier nombre d'indications de recherche devant être envoyées au terminal d'accès (12), le premier nombre d'indications de recherche étant basé sur la valeur de recherche ; et
un hacheur (38) configuré pour recevoir la valeur de recherche et pour générer un premier nombre de valeurs de hachage égal au premier nombre d'indications de recherche, chaque valeur de hachage déterminant les emplacements où ledit dispositif de peuplement d'indications de recherche (48) peuple le premier message de recherche (56) avec l'une, respective, du premier nombre d'indications de recherche.

2. Appareil (24) selon la revendication 1, dans lequel le nombre de valeurs de hachage dans le premier message de recherche (56) est supérieur à deux.

3. Appareil (24) selon la revendication 1, dans lequel le nombre d'indications de recherche dans le message de recherche (56) est supérieur à deux.

4. Appareil (24) selon la revendication 1, dans lequel le premier message de recherche (56) est formaté de façon à comprendre une pluralité d'emplacements d'indications de recherche (112), et dans lequel chaque valeur de hachage générée par ledit hacheur (38) détermine un emplacement (112) dans le premier message de recherche (56) que ledit dispositif de peuplement d'indications de recherche (48) peuple avec une indication de recherche.

5. Appareil (24) selon la revendication 4, dans lequel les valeurs de hachage générées par ledit hacheur (38) se situent à l'intérieur d'une gamme de valeurs, le nombre de valeurs dans la gamme correspondant en nombre à la pluralité d'emplacements d'indications de recherche (112) du premier message de recherche (56).

6. Appareil (24) selon la revendication 5, dans lequel le nombre de valeurs de hachage générées par ledit hacheur (38) comprend une pluralité de valeurs de hachage, les valeurs de hachage étant réparties de façon sensiblement uniforme dans la gamme de valeurs du nombre des emplacements d'indications de recherche (112).

7. Appareil (24) selon la revendication 4, dans lequel le premier message de recherche (56) est formaté de façon à comprendre un premier groupe (118) d'une première pluralité d'emplacements d'indications de recherche (112) et au moins un deuxième groupe (122) d'une deuxième pluralité d'emplacements d'indications de recherche (112), dans lequel le nombre d'indications de recherche comprend une première indication de recherche et au moins une deuxième indication de recherche.

8. Appareil (24) selon la revendication 7, dans lequel ledit hacheur (38) génère une première valeur de hachage et au moins une deuxième valeur de hachage, la première valeur de hachage provoquant le peuplement par ledit dispositif de peuplement d'indications de recherche (48) d'un emplacement d'indication de recherche (112) du premier groupe (118) avec la première indication de recherche et la deuxième valeur de hachage provoquant le peuplement par ledit dispositif de peuplement d'indication de recherche (48) d'un emplacement d'indication de recherche (112) du deuxième groupe (122) avec la deuxième indication de recherche.

9. Appareil (24) selon la revendication 1, dans lequel ledit hacheur (38) est configuré pour exécuter une fonction de hachage sur un nombre d'entrées (42, 43), chaque valeur de hachage créée par ledit hacheur étant fournie en exécutant la fonction de hachage sur le nombre d'entrées (42, 43).

10. Appareil (24) selon la revendication 9, dans lequel ledit hacheur (38) crée la première valeur de hachage en exécutant la fonction de hachage sur une première combinaison du nombre d'entrées (42, 43), et crée la deuxième valeur de hachage en exécutant la fonction de hachage sur une deuxième combinaison du nombre d'entrées (42, 43).

11. Appareil (24) selon la revendication 9, dans lequel le nombre d'entrées (42, 43) sur lequel ledit hacheur (38) exécute la fonction de hachage comprend un nombre pseudo-aléatoire.

12. Appareil (24) selon la revendication 1, dans lequel les valeurs de hachage générées par ledit-hacheur (38) dépendent du temps.

13. Appareil (24) selon la revendication 1, dans lequel chacune des valeurs de hachage générées par ledit hacheur (38) a une valeur différente.

14. Appareil selon la revendication 13, dans lequel ledit hacheur (38) comprend en outre un identificateur configuré pour identifier des valeurs de hachage précédemment sélectionnées, ledit hacheur empêchant la génération ultérieure d'une valeur de hachage égale à une valeur de hachage précédemment sélectionnée.

15. Appareil selon la revendication 1, dans lequel le nombre de valeurs de hachage générées par ledit hacheur (38) comprend un nombre réglé de hachages.

16. Appareil (26) destiné à un terminal d'accès (12) qui reçoit un premier message de recherche (56) sur un premier canal de recherche, ledit appareil comprenant :
un détecteur et analyseur de message de signalisation (68), qui détecte le contenu d'un message de signalisation (45) provenant d'un réseau d'accès (14) et qui analyse le message de signalisation pour vérifier à partir de celui-ci un premier nombre de valeurs de hachage envoyées au terminal d'accès (12), le premier nombre de valeurs de hachage étant déterminé sur la base de l'activité dans le réseau d'accès (14) ;
un hacheur (74) configuré pour générer un premier nombre de sorties de hachage en réponse au message de signalisation (45) ; et
un détecteur de message de recherche (82), configuré pour détecter des - valeurs d'indications de recherche peuplant le premier message de recherche (56), les sorties de hachage générées par ledit hacheur (74) étant utilisées pour identifier, pour ledit détecteur de message de recherche (82), les emplacements dans le premier message de recherche (56) où des valeurs des indications de recherche doivent être recherchées.

17. Appareil selon la revendication 16, dans lequel le nombre de sorties de hachage générées par ledit hacheur (74) est supérieur à deux.

18. Procédé destiné à effectuer une recherche, ledit procédé comprenant les opérations consistant à :
générer, dans un réseau d'accès (14), un premier nombre de valeurs de hachage dépendant de l'activité du réseau ;
peupler un premier message de recherche (56) avec un premier nombre d'indications de recherche, le nombre d'indications de recherche correspondant au nombre de valeurs de hachage, des emplacements (112) des premières indications de recherche dans le premier message de recherche (56) étant déterminées par le premier nombre de valeurs de hachage générées pendant ladite opération de génération ; et
envoyer le premier message de recherche (56) à un terminal d'accès (12), après avoir peuplé le premier message de recherche (56) avec le premier nombre d'indications de recherche.

19. Procédé selon la revendication 18, comprenant en outre l'opération consistant à détecter, sur le terminal d'accès (12), le premier message de recherche (56) après fourniture de la totalité du premier message de recherche (56) sur le terminal d'accès (12).

20. Procédé selon la revendication 19, comprenant en outre l'opération consistant à générer, sur le terminal d'accès (12), un nombre de sorties de hachage égal au nombre de valeurs de hachage générées sur le réseau d'accès (14).

21. Procédé selon la revendication 20, comprenant en outre l'opération consistant à déterminer des valeurs d'indications de recherche à des emplacements (112) du premier message de recherche (56), les indications de recherche étant identifiées par les sorties de hachage générées par le hacheur (74) sur le terminal d'accès (12).

22. Procédé selon la revendication 20, dans lequel lesdites opérations consistant à générer des valeurs de hachage sur le réseau d'accès (14) et à générer des sorties de hachage sur le terminal d'accès (12) sont effectuées par des méthodes identiques.

23. Procédé selon la revendication 21, dans lequel les indications de recherche peuplant le premier message de recherche (56) sont amenées à peupler ce dernier en conformité avec la production d'un deuxième message de recherche.
